# FASCICULE DE BREVET EUROPEEN

(11) **EP 4 568 884 B1**
(45) Date de publication et mention de la délivrance du brevet: **03.12.2025**
(21) Numéro de dépôt: 24790423.8
(22) Date de dépôt: 13.10.2024
(51) Int. Cl.: B63H 9/02

(54) **GRÉEMENT ROTATIF DE TYPE FLETTNER INCLINABLE**
KIPPBARE FLETTNER-DREHPLATTFORM
TILTABLE FLETTNER-TYPE ROTARY RIG

(30) Priorité: 13.10.2023 FR 2311069; 13.10.2023 FR 2311073
(43) Date de publication de la demande: 18.06.2025
(73) Titulaire: Farwind Energy, 44300 Nantes (FR)
(72) Inventeur: BOGNET, Brice, 44240 Sucé-sur-Erdre (FR); CAILLAUD, Antoine, 44200 Nantes (FR)
(74) Mandataire: Hamann, Jean-Christophe
(86) Numéro de dépôt international: PCT/EP2024/078819
(87) Numéro de publication internationale: WO 2025/078679

(56) Documents cités:
- WO-A1-2013/110695
- CN-A- 104 955 725
- KR-A- 20140 000 570

## Description

### Domaine technique

L'invention appartient au domaine de la propulsion vélique, plus particulièrement l'invention concerne un gréement rotatif de type Flettner, adapté à la propulsion d'un navire, en mode de propulsion principal ou en assistance d'un autre mode de propulsion.

### Technique antérieure

La propulsion vélique, en mode de propulsion principal ou en assistance, est un moyen de réduire l'empreinte carbone du transport maritime.

Parmi les moyens de propulsion vélique envisagés pour ce type d'application, les voilures rotatives de type Flettner, utilisant l'effet Magnus, sont intéressantes car elles permettent de générer une force de poussée vélique dans une gamme élargie de conditions de vent, sans besoin d'orienter la voile et avec un encombrement réduit comparativement à une voilure statique souple ou rigide.

Cependant, l'ajout de ces gréements, dont la hauteur peut dépasser 50 m depuis le pont du navire, ne va pas sans poser des difficultés notamment pour le franchissement des ponts au passage des estuaires, ou vis-à-vis des installations portuaires. Le fardage du gréement rotatif donc son impact sur la consommation du navire lors de la navigation par vent de face ou sur la stabilité du navire par navigation dans un vent fort sont également des facteurs limitant la taille acceptable des gréements de type Flettner.

Autant les voiles souples peuvent être affalées et les mâts portant ces voiles inclinés de sorte à en limiter la hauteur, dans le cas d'u gréement rotatif de type Flettner une telle opération est nettement plus complexe du fait du poids du gréement et de la présence des dispositifs d'entraînement et de guidage en rotation du gréement.

Le document US 4,401,284 décrit un gréement rotatif gonflable, ce type de dispositif est difficilement adaptable à des gréements de type Flettner dont les dimensions sont en rapport avec les besoins de propulsion des navires visés par l'invention.

Le document US 4,602,584 décrit un navire pourvu d'une voilure rotative de type Flettner, comprenant à sa base, sensiblement au niveau du pont du navire un mécanisme d'articulation permettant d'affaler le gréement rotatif en le basculant sur le pont. Ce type de mécanisme est également difficilement adaptable à des gréements rotatifs de grandes dimensions et dont le poids atteint plusieurs dizaines de tonnes, il requiert, en plus, des haubans pour maintenir le gréement rotatif dans sa position, lesquels viennent encombrer le pont. Le document CN104955725 montre aussi un gréement rotatif Flettner similaire.

### Résumé de l'invention

L'invention vise à résoudre les inconvénients de l'art antérieur et concerne à cette fin, un gréement rotatif de type Flettner s'étendant selon une direction verticale sur une hauteur H mesurée depuis une base, autour d'un axe de rotation, configuré pour tourner autour de cet axe de rotation, comprenant :
un tronçon inférieur comprenant une surface aérodynamique inférieure liée à un moyen d'entraînement en rotation ;
un tronçon supérieur comprenant une surface aérodynamique supérieure liée en continuité à la surface aérodynamique inférieure par des moyens de liaison déconnectables ; et
des moyens de basculement comprenant une liaison pivot selon un axe d'une direction sécante à la direction verticale, entre le tronçon inférieur et le tronçon supérieur à une hauteur h mesurée depuis la base, configurés de sorte que lorsque les moyens de liaison déconnectables sont déconnectés, le tronçon supérieur est apte à pivoter autour de la liaison pivot relativement au tronçon inférieur.

Ainsi, le tronçon supérieur du gréement rotatif peut être basculé autour de la liaison pivot à la hauteur h de sorte à réduire la hauteur du gréement rotatif.

Le gréement rotatif Flettner peut être mis en œuvre selon les modes de réalisation et les variantes exposés ci-après lesquels sont à considérer individuellement ou selon toute combinaison techniquement opérante.

La hauteur h est préférentiellement supérieure ou égale à une hauteur H/2., ce qui permet de basculer le tronçon supérieur d'un angle de bascule de l'ordre de 180° relativement au tronçon inférieur.

Avantageusement le tronçon inférieur comprend une tour intérieure s'étendant depuis la base sur une hauteur inférieure ou égale à la hauteur h. Cette configuration permet de concentrer le poids du gréement rotatif Flettner principalement dans le tronçon inférieur et de réduire le poids du tronçon supérieur pour en faciliter les manœuvres de basculement.

Selon des variantes de réalisation, la tour est fixe et la surface aérodynamique inférieure est guidée en rotation autour de la tour ou le moyen d'entraînement en rotation est configuré pour entraîner la tour en rotation et la surface aérodynamique inférieure est liée en rotation à la tour.

La tour peut comprendre une structure de tour constituée d'un matériau comprenant majoritairement des fibres ligneuses.

Les surfaces aérodynamiques peuvent comprendre un assemblage de panneaux constitués d'un matériau choisi parmi le bois, un matériau composite et une toile.

Ces modes de réalisation permettent de réduire le poids du gréement rotatif Flettner tout en lui conférant une grande rigidité, notamment en flexion perpendiculairement à l'axe de rotation.

Avantageusement, les moyens de basculement comprennent un dispositif de bascule configuré de sorte que le tronçon supérieur est déplacé selon la direction verticale avant son pivotement autour de l'axe de la liaison pivot. Ce mode de réalisation permet de déconnecter les moyens de centrage et de liaison entre le tronçon inférieur et le tronçon supérieur via la cinématique de basculement imposée par le dispositif de bascule.

Selon un mode de réalisation, le dispositif de bascule est configuré de sorte que l'axe de la liaison pivot se déplace depuis l'intérieur d'un diamètre d'enveloppe du tronçon inférieur vers l'extérieur du diamètre d'enveloppe du tronçon inférieur au cours d'un basculement du tronçon supérieur relativement au tronçon inférieur.

Avantageusement le dispositif de bascule est configuré pour basculer le tronçon supérieur relativement au tronçon inférieur d'un angle de basculement d'au moins 90° et préférentiellement l'angle de basculement maximum du tronçon supérieur relativement au tronçon inférieur supérieur à 160°.

Avantageusement, le gréement rotatif Flettner comprend un dispositif d'équilibrage en rotation du tronçon supérieur.

Selon un mode de réalisation, le dispositif d'équilibrage en rotation comprend une pluralité de masses et des moyens pour contrôler la position radiale de chaque nasse de la pluralité.

Selon un autre mode de réalisation, qui peut être combiné avec le précédent, le dispositif d'équilibrage en rotation comprend une pluralité de masselottes et des moyens pour déplacer chaque masselotte le long d'une circonférence intérieure du tronçon supérieur.

Le gréement rotatif Flettner peut comprendre comprenant une pluralité d'accéléromètres répartis sur une hauteur de la surface aérodynamique inférieure et de la surface aérodynamique supérieure et un centre de calcul configuré pour acquérir des informations de vibration issues de la pluralité d'accéléromètres, et comprenant :
des moyens de calcul pour déterminer une configuration du dispositif d'équilibrage en fonction des informations reçues des accéléromètres ;
des moyens de commande pour modifier une configuration du dispositif d'équilibrage.

Selon ce dernier mode de réalisation, un procédé pour le basculement du gréement rotatif Flettner, le tronçon supérieur et le tronçon inférieur étant alignés et connectés, comprend les étapes de :
déconnecter les moyens déconnectables ;
pivoter le tronçon supérieur relativement au tronçon inférieur ;
pivoter le tronçon supérieur en sens inverse pour le ramener en alignement avec le tronçon inférieur ;
connecter les moyens déconnectables ;
entraîner le gréement rotatif en rotation selon un cycle de mesure et mesurer une vibration au moyen de la pluralité d'accéléromètres ;
calculer au moyen du centre de calcul une configuration du dispositif d'équilibrage ;
appliquer la configuration calculée au dispositif d'équilibrage,

### Brève description des dessins

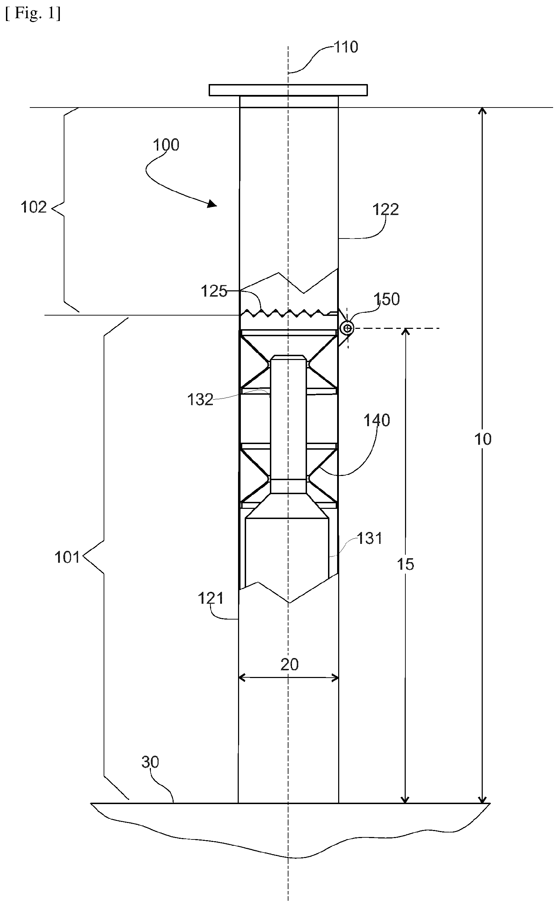

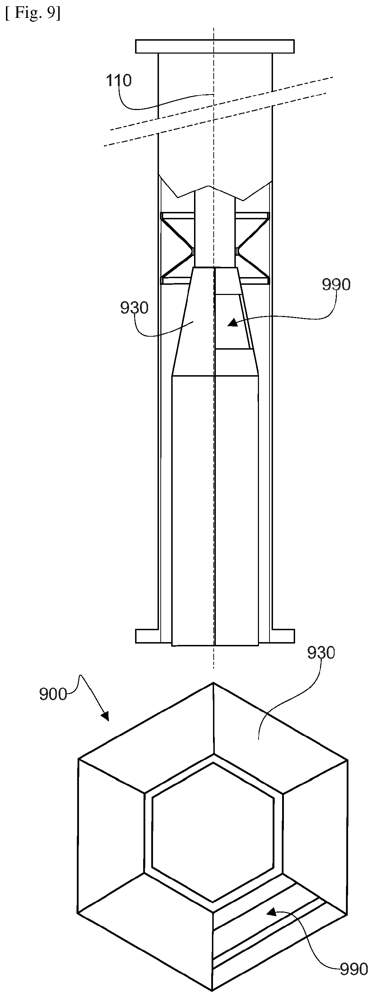

L'invention est mise en œuvre selon les modes de réalisation préférés, nullement limitatifs, exposés ci-après en référence à [Fig.1] à [Fig.9] dans lesquelles :
**Fig.1**
   [Fig.1] montre selon une vue de face en coupe partielle un exemple de principe d'un gréement rotatif Flettner pourvue d'un mécanisme de basculement ;
**Fig.2**

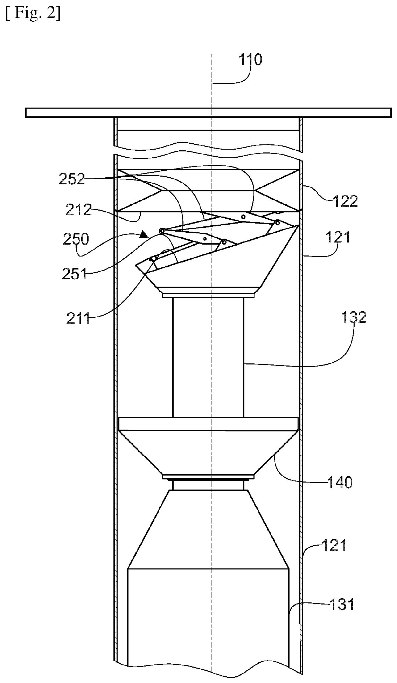

   [Fig.2] est une vue partielle en coupe d'un exemple de réalisation d'un gréement rotatif Flettner dont les deux tronçons sont alignés
**Fig.3**

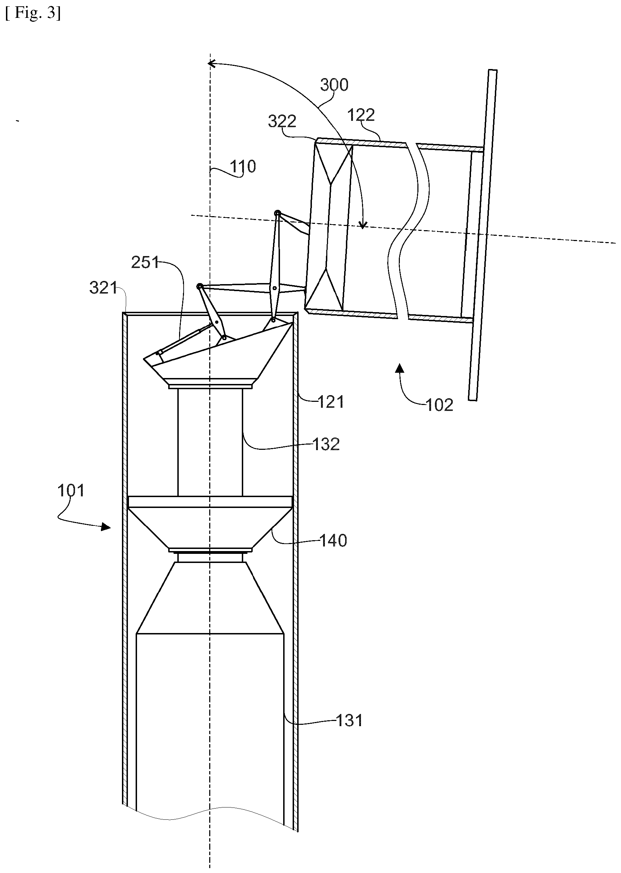

   [Fig.3] montre en vue partielle, le gréement rotatif Flettner de [Fig.2] dans laquelle le tronçon supérieur est basculé d'un angle de basculement de l'ordre de 90° relativement au tronçon inférieur ;
**Fig.4**

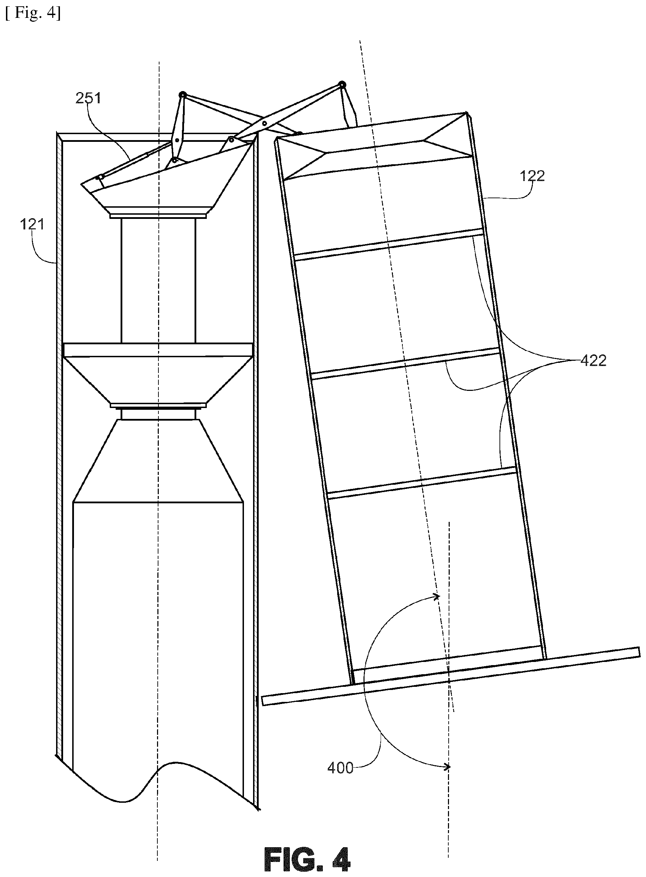

   [Fig.4] montre en vue partielle, le gréement rotatif Flettner de [Fig.2] dans laquelle le tronçon supérieur est basculé d'un angle de basculement de l'ordre de 170° relativement au tronçon inférieur ;
**Fig.5**

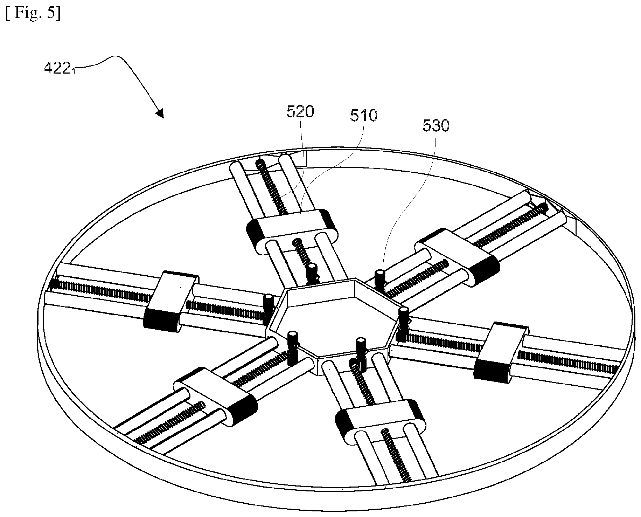

   [Fig.5] montre selon une vue en perspective de dessus un premier exemple de réalisation d'un dispositif d'équilibrage en rotation du tronçon supérieur du gréement rotatif Flettner ;
**Fig.6**

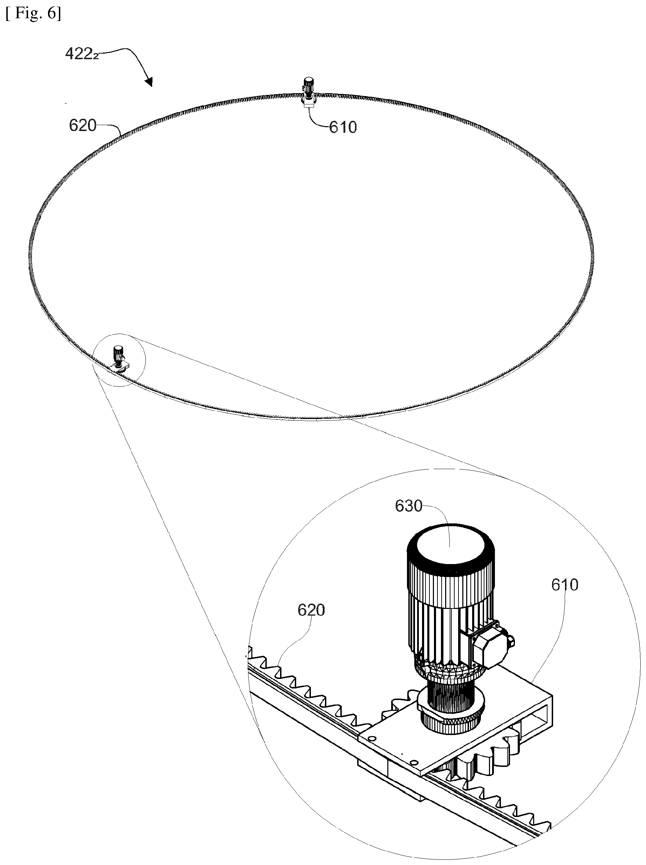

   [Fig.6] montre un deuxième exemple de réalisation d'un dispositif d'équilibrage en rotation du tronçon supérieur du gréement rotatif Flettner.
**Fig.7**

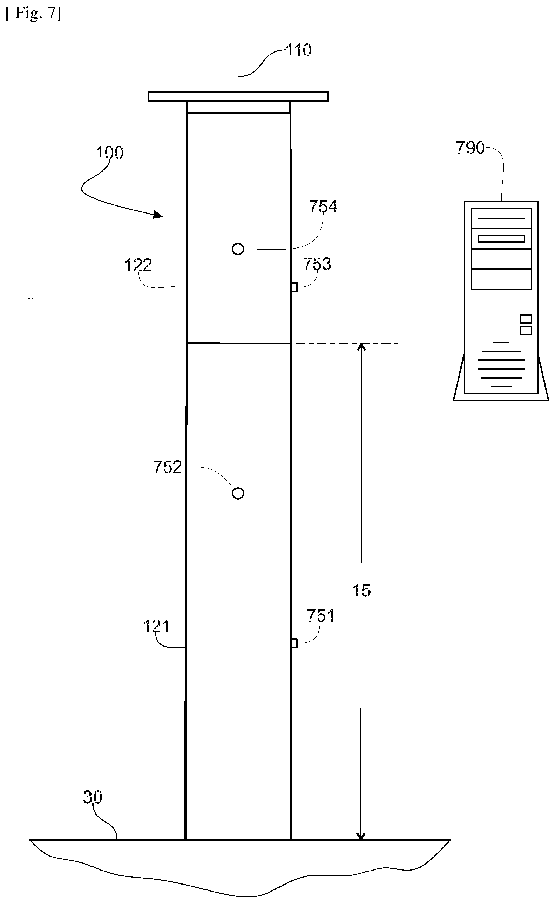

   [Fig.7] représente selon une vue schématique de face un exemple de réalisation du gréement rotatif Flettner comprenant un dispositif de contrôle d'équilibrage ;
**Fig.8**

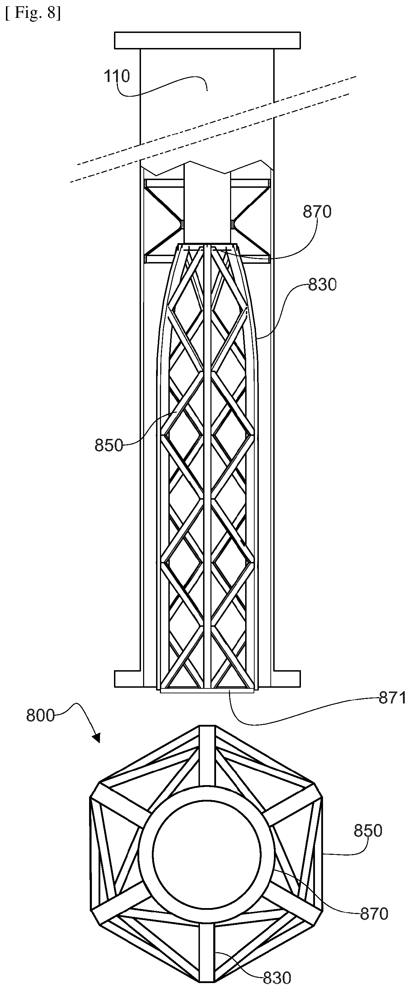

   [Fig.8] représente en vue de face et en coupe partielle un exemple de réalisation d'un gréement rotatif de type Flettner comprenant un exemple de réalisation d'une structure de tour comportant un assemblage de poutres en treillis ainsi qu'une vue de dessus de la structure de tour, la vue de dessus et la vue de face ne sont pas à la même échelle ; et
**Fig.9**
   [Fig.9] représente en vue de face et en coupe partielle un exemple de réalisation d'un gréement rotatif de type Flettner comprenant un exemple de réalisation d'une structure de tour constituée de panneaux de bois lamellés-croisés ainsi qu'une vue de dessus de la structure de tour, la vue de dessus et la vue de face ne sont pas à la même échelle.

### Description des modes de réalisation

[Fig.1] selon un exemple de réalisation, un gréement rotatif Flettner (100) adaptée à la propulsion d'un navire, s'étend selon une hauteur H (10), couramment supérieure à 50 mètres par rapport à un pont (30) du navire, selon une surface aérodynamique externe (121, 122) sensiblement cylindrique comprise dans un diamètre d'enveloppe D (20), supérieur à 3 mètres, communément supérieur à 5 mètres et inférieur ou égal à 7 mètres. De sorte qu'un coefficient d'élancement défini par un rapport H/D est compris entre 5 et 10 couramment entre 5 et 8.

Le terme « cylindrique » n'est pas limité à un cylindre droit et de diamètre constant sur sa hauteur.

Le poids d'un tel gréement rotatif Flettner est de quelques dizaines de tonnes couramment de 30 à 50 tonnes. Par suite, basculer puis remettre en position verticale l'ensemble du gréement rotatif Flettner nécessiterait des moyens conséquents d'autant plus qu'au cours du mouvement de bascule celui-ci serait soumis à son propre poids ce qui nécessiterait la mise en place de moyens de support auxiliaires tels que des haubans et des treuils pilotés.

En utilisation, c'est-à-dire pour fournir une force de propulsion apte à faire avancer le navire, le gréement Flettner est mis en rotation autour d'un axe vertical (110) à une vitesse de rotation telle que la vitesse tangentielle à la surface aérodynamique externe (121, 122) est de l'ordre ou supérieure à 2 fois la vitesse d'un vent auquel est soumis le gréement rotatif Flettner, ce qui conduit à une vitesse de rotation comprise entre 100 et 300 tours/minute, couramment entre 100 et 200 tours/minutes et le plus souvent comprise entre 100 et 150 tours/ minute.

Le gréement rotatif Flettner comprend à l'intérieur de la surface aérodynamique une tour (131, 132) qui assure sa rigidité verticale et la transmission de l'effort de poussée vélique au navire.

La surface aérodynamique (121) est, au moins sur un tronçon dit tronçon inférieur (101), liée par des viroles (140) à la tour (131, 132). Selon un exemple de réalisation la tour (131, 132) comprend une structure de tour constituée d'un matériau comprenant des fibres ligneuses.

Sur un deuxième tronçon du gréement rotatif Flettner, dit tronçon supérieur (102) la surface aérodynamique (122) est liée en rotation au tronçon inférieur par exemple via une interface appropriée (125) mettant en œuvre des formes complémentaires, sans être connectée à la tour (131, 132).

Selon un mode de réalisation, la tour (131, 132) est fixe et la surface aérodynamique (121, 122) est entraînée en rotation autour de l'axe vertical (110) par des moyens appropriés et guidée en rotation autour de la tour. Dans ce cas les viroles (140) sont des paliers mettant en œuvre des moyens de guidage en rotation autour de la tour, par exemple des roulements (non représentés).

Selon un autre mode de réalisation, la tour est entraînée en rotation autour de l'axe vertical (110), les viroles (140) sont alors des moyens de liaison complète entre la tour (131, 132) et la surface aérodynamique (121) du tronçon inférieur (101).

La surface aérodynamique (121, 122) est constituée, selon des exemples de réalisation, d'un assemblage panneaux légers à base de bois, d'un matériau composite à renfort fibreux, voire de toiles tendues. Cet assemblage comprend des moyens de renfort (non représentés) par exemple sous la forme de cerceaux métalliques ou en matériau composite au niveau des liaisons avec la tour et au niveau de l'interface (125) de connexion entre les deux tronçons (101, 102).

Le gréement rotatif Flettner comprend à une hauteur h (15) une liaison pivot (150) dont l'axe de pivot s'étend selon un axe autre que vertical, et de manière préférée horizontale, liant le tronçon supérieur (102) au tronçon inférieur (101) de sorte que le tronçon supérieur (102) puisse basculer relativement au tronçon inférieur (101) par rotation autour de cet axe de pivot.

L'homme du métier comprend que le basculement autour de la liaison peut être réalisé par une cinématique plus complexe que le simple pivotement et peut comprendre, par exemple une translation verticale du deuxième tronçon (102) pour escamoter la liaison en rotation (125) autour de l'axe vertical (110) entre les tronçons avant de réaliser le pivotement autour de la liaison pivot (150).

Dans la mesure où le tronçon supérieur (102) ne comprend pas de liaison en rotation avec la tour et que ce tronçon est nettement plus léger que le tronçon inférieur les moyens nécessaires pour ce basculement sont nettement simplifiés en regard d'un basculement de l'ensemble du gréement rotatif Flettner.

Ainsi le poids du deuxième tronçon (102) est de l'ordre de quelques tonnes, typiquement de 5 à 10 tonnes selon la hauteur h, contre plusieurs dizaines de tonnes pour l'ensemble du gréement rotatif Flettner.

[Fig.2], ainsi, selon un exemple de réalisation, le mécanisme de basculement est placé à l'intérieur du gréement rotatif Flettner.

À cette fin, le tronçon inférieur (101) comprend à son sommet une plateforme inférieure (211) et le tronçon supérieur (102) comprend à son extrémité proximale avec le tronçon inférieur, une plateforme supérieure (212). La plateforme inférieure (211) est liée en liaison complète à la surface aérodynamique inférieure (121) et la plateforme supérieure (212) est liée, en liaison complète, avec la surface aérodynamique supérieure (122).

Selon cet exemple de réalisation, lorsque le tronçon inférieur et le tronçon supérieur sont accouplés avec leurs surfaces aérodynamiques (121, 122) en continuité l'une de l'autre, le dispositif de bascule (250), de même que l'axe de pivot se trouvent à l'intérieur des enveloppes des tronçons supérieurs et inférieurs et ne sont pas visibles de l'extérieur du gréement rotatif Flettner et ainsi ne perturbent pas les écoulements aérodynamiques sur les surfaces de la voile.

Selon cet exemple de réalisation, le dispositif de bascule (250) comprend une pluralité de bielles et est commandé par un ou plusieurs vérins (251) hydrauliques, électriques ou pneumatiques, de sorte que la cinématique de basculement produit une translation verticale du tronçon supérieur avant un pivotement autour d'un axe de pivotement à l'extérieur du diamètre d'enveloppe du tronçon inférieur.

Une telle cinématique permet de découpler et d'accoupler des moyens de centrage et d'entraînement en rotation entre la surface aérodynamique inférieure (121) et la surface aérodynamique supérieure (122).

Ainsi, selon un exemple de réalisation [Fig.3] les extrémités des tronçons supérieurs et inférieurs comprennent des surfaces (321, 322) complémentaires, par exemple coniques qui assurent le centrage des deux tronçons l'un par rapport à l'autre et participent à la transmission de l'entraînement en rotation autour de l'axe vertical (110) du tronçon supérieur par le tronçon inférieur.

Comme indiqué précédemment la cinématique imposée par le dispositif de bascule (250) permet lors de l'extension du ou des vérins (251) et par l'intermédiaire des bielles, de soulever le tronçon supérieur de sorte à séparer les surfaces de centrage (321, 322) respectives des tronçons inférieurs et supérieurs, avant de réaliser le pivotement autour d'un axe de pivot extérieur à l'enveloppe externe du tronçon inférieur.

Un angle de rotation du gréement rotatif Flettner autour de l'axe vertical (110), préalablement au basculement, alors que les deux tronçons (101, 102) sont encore accouplés, permet de définir la position angulaire autour de l'axe vertical (110) de l'axe de pivotement du tronçon supérieur (102) relativement au tronçon inférieur et ainsi de positionner, par exemple, le tronçon supérieur (102) relativement au pont du navire et autour de l'axe vertical (110).

[Fig.3] montre un basculement de l'ordre de 90° du tronçon supérieur (102) relativement à l'axe vertical (110) du tronçon inférieur (101). Dans certaines circonstances, par exemple pour le passage d'un point un tel angle de basculement (300), voire inférieur, peut être suffisant.

[Fig.4] avantageusement, l'angle de basculement final (400) du tronçon supérieur, défini relativement à l'axe vertical (110) du tronçon inférieur, est supérieur à 160°, préférentiellement supérieur à 170° et proche de 180°.

Selon cet exemple de réalisation, l'angle de basculement dépend du déplacement imposé par le vérin (251) du dispositif de bascule (250) et peut-être contrôlé par la distance d'extension de ce vérin.

Avantageusement cet angle de basculement peut également être mesuré à distance par tout moyen optique, notamment de type Laser Tracker. À cette fin, selon un exemple de réalisation, le tronçon inférieur et le tronçon supérieur comprennent des cibles optiques (non représentées) permettant de mesurer la position et l'orientation relatives du tronçon supérieur par rapport au tronçon inférieur. Ces informations sont avantageusement utilisées pour commander en asservissement le vérin (251) du dispositif de bascule.

Selon un exemple de réalisation le tronçon supérieur comprend un ou plusieurs dispositifs d'équilibrage en rotation (422).

[Fig.5] selon un exemple de réalisation un tel dispositif d'équilibrage (422₁) comprend une pluralité de masses (510) et des moyens tels qu'une vis sans fin (520) pilotée par un moteur pas à pas (530) pour déplacer radialement et individuellement chaque masse (510) de la pluralité.

[Fig.6] selon un autre exemple de réalisation le dispositif d'équilibrage (422₂) comprend une pluralité de masselottes (610) chacune déplaçable individuellement sur une couronne dentée (620) selon une circonférence intérieure du tronçon supérieur, par l'intermédiaire d'un moteur pas à pas (630).

Selon un autre mode de réalisation (non représenté) le dispositif d'équilibrage comprend un tore creux d'un diamètre équivalent à un diamètre intérieur du tronçon supérieur, lequel tore creux est rempli d'un matériau pulvérulent tel que du sable.

Ces modes de réalisation du dispositif d'équilibrage en rotation peuvent être combinés sur un même tronçon à différentes hauteurs.

[Fig.7] cette fin, le gréement rotatif Flettner comprend une pluralité d'accéléromètres (751, 752, 753, 754) installés, par exemple, sur les enveloppes constituant les surfaces aérodynamiques (121, 122) du tronçon inférieur et du tronçon supérieur, préférentiellement sur la face interne de cette enveloppe de sorte que les accéléromètres soient relativement protégés de l'environnement.

Lesdits accéléromètres fournissent un signal proportionnel à un niveau vibratoire, ce signal est transmis, par exemple via une liaison de type WiFi^{®} à un centre de calcul (790) avec un identifiant propre à chaque accéléromètre.

Ledit centre de calcul (790) comprend un fichier définissant pour chaque identifiant une position de l'accéléromètre sur le gréement rotatif Flettner et un programme informatique permettant de à partir des signaux acquis de déterminer un défaut d'équilibrage du gréement rotatif Flettner selon un ou plusieurs plans.

Ainsi, après une manœuvre de basculement et de remise en alignement du tronçon supérieur du gréement rotatif Flettner, un cycle de mesure et d'équilibrage est lancé consistant à faire réaliser au gréement rotatif Flettner au moins un tour, à acquérir les signaux des accéléromètres, en déduire un déséquilibre et une correction à partir du programme informatique du centre de calcul (190) et appliquer cette correction en agissant sur les dispositifs d'équilibrage en rotation.

Alternativement ou en complément des accéléromètres, une mesure sans contact, par exemple par interférométrie laser, peut également être réalisée au cours de la procédure d'équilibrage afin de déterminer le déséquilibre en rotation du gréement rotatif Flettner.

Afin de limiter les vibrations du gréement rotatif Flettner celui-ci est réalisé selon une structure légère et rigide, permettant de déporter les premières fréquences de résonance en flexion du gréement, de la fréquence de rotation du gréement rotatif Flettner,

La vitesse de rotation N en tr/min du gréement rotatif Flettner est telle que la vitesse tangentielle sur la surface aérodynamique est supérieure à 2 fois la vitesse du vent apparent.

Ainsi, pour une vitesse de rotation N du gréement rotatif Flettner de 100 tr/min la fréquence principale de sollicitation est de 1,67 Hz,et pour une vitesse rotation de 150 tr/min la fréquence principale de sollicitation est de 2,5 Hz.

À cette fin, un tronçon inférieur de la tour (131) comprend une structure de tour constituée de bois ou d'un dérivé technique du bois tel qu'un lamellé-collé, un lamellé croisé, un bois lamifié ou un composite renforcé par des fibres ligneuses telle que des fibres de bambou.

La structure de tour peut être une structure tubulaire pleine constituée de poutres ou de panneaux assemblés jointifs, ou une structure en ossature ajourée constituée de chevrons croisés avec des contreventements ou de fermes organisés selon une structure en treillis.

[Fig.8] selon un exemple de réalisation la structure de tour est en ossature ajourée (800) et comprend une structure en treillis (800) comprenant au moins une virole (870), par exemple dans sa section supérieure, à laquelle sont connectées des poutres membrures (830) s'étendant verticalement. Les poutres membrures (830) peuvent être constituées de bois ou d'un dérivé technique du bois tel qu'un lamellé-collé ou un bois lamifié sans que ces exemples ne soient limitatifs.

Des poutres treillis (850), également constituées de bois ou d'un dérivé technique du bois, s'étendent selon une structure en treillis entre les poutres membrures (830).

L'ossature ainsi constituée peut comprendre une virole inférieure (871) pour sa liaison avec un socle fixe ou un dispositif d'entraînement en rotation.

Les viroles peuvent être constituées de bois ou d'un dérivé technique du bois, d'un matériau métallique, tel qu'un acier, un alliage léger d'aluminium, un alliage de titane, d'un matériau composite à matrice organique thermodurcissable ou thermoplastique renforcée par des fibres continues de verre, de carbone, ou des fibres organiques bio-sourcées telles que du lin, du chanvre ou du bambou.

Les assemblages entre les poutres membrures (830) et les poutres treillis (850) peuvent être réalisés par des ferrures en acier clouées ou vissées.

[Fig.9] selon la structure de tour est une structure tubulaire pleine (900) constituée de panneaux de bois lamellés-croisés, aussi désignés par panneaux CLT pour « *Cross Laminated Timber ».*

De tels panneaux sont composés de plusieurs couches croisées de planches en bois massif séché, d'une essence sélectionnée parmi le sapin, l'épicéa, le pin maritime, le pin sylvestre et le douglas ou leurs combinaisons, sans que ces exemples ne soient limitatifs. Leurs caractéristiques mécaniques de ces panneaux sont suffisantes pour pouvoir les utiliser, sans ossature additionnelle, en tant que plancher, paroi ou contreventement.

Les panneaux (930) sont plans et d'une épaisseur comprise entre 50 mm et 600 mm, les plus fortes épaisseurs étant utilisées à la base de la structure de tour puis d'épaisseurs décroissantes selon l'axe vertical (110).

Les panneaux sont directement assemblés entre eux de sorte à former une section polygonale creuse, hexagonale selon l'exemple non limitatif de [Fig.9].

Les panneaux peuvent être assemblés entre eux par un système de rainures et de languettes métalliques et couture par boulonnage,

De tels panneaux plans sont rigides et faciles à fabriquer, découper usiner et assembler.

La structure peut comprendre des ouvertures (990) afin d'améliorer sa ventilation intérieure.

Quel que soit le mode de réalisation de la structure de tour les éléments structurels en bois ou dérivés techniques du bois peuvent être protégés de l'environnement par des traitements fongicides et des vernis de protection marine.

La description ci-avant et les exemples de réalisation montrent que l'invention atteint les objectifs visés, en particulier elle permet de réduire la hauteur d'un gréement rotatif Flettner de grande dimension en basculant une partie supérieure allégée de ce gréement rotatif Flettner facilitant et accélérant une telle manœuvre en regard des solutions de l'art antérieur.

## Revendications

1. Gréement rotatif Flettner (100) s'étendant selon une direction verticale sur une hauteur H (10) mesurée depuis une base (30), autour d'un axe de rotation (110), configurée pour tourner autour de cet axe de rotation, comprenant :
un tronçon inférieur (101) comprenant une surface aérodynamique inférieure (121) liée à un moyen d'entraînement en rotation ;
un tronçon supérieur (102) comprenant une surface aérodynamique supérieure (122) liée en continuité à la surface aérodynamique inférieure (121) par des moyens de liaison déconnectables (125, 321, 322) ; et
des moyens de basculement (250) comprenant une liaison pivot (150) selon un axe d'une direction sécante à la direction verticale, entre le tronçon inférieur (101) et le tronçon supérieur (102) à une hauteur h (15) mesurée depuis la base (30), configurés de sorte que lorsque les moyens de liaison déconnectables (125, 321, 322) sont déconnectés, le tronçon supérieur (102) est apte à pivoter autour de la liaison pivot (150) relativement au tronçon inférieur (101).

2. Gréement rotatif Flettner selon la revendication 1, dans lequel la hauteur h (15) est supérieure ou égale à une hauteur H/2.

3. Gréement rotatif Flettner selon la revendication 1, dans lequel le tronçon inférieur (101) comprend une tour intérieure (131, 132) s'étendant depuis la base sur une hauteur inférieure ou égale à la hauteur h (15).

4. Gréement rotatif Flettner selon la revendication 3, dans lequel la tour (131, 132) est fixe et la surface aérodynamique inférieure (121) est guidée en rotation autour de la tour.

5. Gréement rotatif Flettner selon la revendication 3, dans lequel le moyen d'entraînement en rotation est configuré pour entraîner la tour en rotation et dans lequel la surface aérodynamique inférieure (121) est liée en rotation à la tour.

6. Gréement rotatif Flettner selon la revendication 3, dans lequel la tour comprend une structure de tour (800, 900) constituée d'un matériau comprenant majoritairement des fibres ligneuses.

7. Gréement rotatif Flettner selon la revendication 3, dans lequel les surfaces aérodynamiques (121, 122) comprennent un assemblage de panneaux constitués d'un matériau choisi parmi le bois, un matériau composite et une toile.

8. Gréement rotatif Flettner selon la revendication 1, dans lequel les moyens de basculement comprennent un dispositif de bascule (250) configuré pour que le tronçon supérieur (102) soit déplacé selon la direction verticale avant son pivotement autour de l'axe de la liaison pivot.

9. Gréement rotatif Flettner selon la revendication 8, dans lequel le dispositif de bascule (250) est configuré pour que l'axe de la liaison pivot se déplace depuis l'intérieur d'un diamètre d'enveloppe (20) du tronçon inférieur (101) vers l'extérieur du diamètre d'enveloppe du tronçon inférieur au cours d'un basculement du tronçon supérieur (102) relativement au tronçon inférieur (101).

10. Gréement rotatif Flettner selon la revendication 8, dans lequel le dispositif de bascule (250) est configuré pour basculer le tronçon supérieur (102) relativement au tronçon inférieur (101) d'un angle de basculement (300, 400) d'au moins 90°.

11. Gréement rotatif Flettner selon la revendication 10, dans lequel un angle de basculement maximum (400) du tronçon supérieur (102), relativement au tronçon inférieur (101), est supérieur à 160°.

12. Gréement rotatif Flettner selon la revendication 1, comprenant un dispositif d'équilibrage (422) en rotation du tronçon supérieur (102).

13. Gréement rotatif Flettner selon la revendication 12, dans lequel le dispositif d'équilibrage en rotation comprend une pluralité de masses (510) et des moyens (520, 530) pour contrôler la position radiale de chaque nasse de la pluralité.

14. Gréement rotatif Flettner selon la revendication 12, dans lequel le dispositif d'équilibrage en rotation comprend une pluralité de masselottes (610) et des moyens (623, 630) pour déplacer chaque masselotte le long d'une circonférence intérieure du tronçon supérieur.

15. Gréement rotatif Flettner selon la revendication 12, comprenant une pluralité d'accéléromètres (751, 752, 753, 754) répartis sur une hauteur de la surface aérodynamique inférieure et de la surface aérodynamique supérieure et un centre de calcul (190) configuré pour acquérir des informations de vibration issues de la pluralité d'accéléromètres, et comprenant :
des moyens de calcul pour déterminer une configuration du dispositif d'équilibrage (422) en fonction des informations reçues des accéléromètres ;
des moyens de commande pour modifier une configuration du dispositif d'équilibrage.

16. Procédé pour le basculement d'un gréement rotatif Flettner selon la revendication 15, le tronçon supérieur et le tronçon inférieur étant alignés et connectés, le procédé comprenant les étapes de :
déconnecter les moyens déconnectables ;
pivoter le tronçon supérieur relativement au tronçon inférieur ;
pivoter le tronçon supérieur en sens inverse pour le ramener en alignement avec le tronçon inférieur ;
connecter les moyens déconnectables ;
entraîner le gréement rotatif en rotation selon un cycle de mesure et
mesurer une vibration au moyen de la pluralité d'accéléromètres ;
calculer au moyen du centre de calcul une configuration du dispositif d'équilibrage ;
appliquer la configuration calculée au dispositif d'équilibrage,

## Patentansprüche

1. Eine Flettner-Drehvorrichtung (100), die sich in vertikaler Richtung über eine Höhe H (10), gemessen von einer Basis (30), um eine Drehachse (110) erstreckt und so konfiguriert ist, dass sie sich um diese Drehachse dreht, umfassend:
einen unteren Abschnitt (101) mit einer unteren aerodynamischen Fläche (121), die mit einem Drehantriebsmittel verbunden ist;
einen oberen Abschnitt (102) mit einer oberen aerodynamischen Oberfläche (122), die durch eine lösbare Verbindungseinrichtung (125, 321, 322) kontinuierlich mit der unteren aerodynamischen Oberfläche (121) verbunden ist; und
eine Kippmittel (250), umfassend eine Schwenkverbindung (150) entlang einer Achse mit einer Sekantenrichtung die zur vertikalen Richtung, zwischen dem unteren Abschnitt (101) und dem oberen Abschnitt (102) in einer Höhe h (15), gemessen von der Basis (30), die so konfiguriert ist, dass, wenn die trennbaren Verbindungsmittel (125, 321, 322) getrennt sind, der obere Abschnitt (102) in der Lage ist, um die Schwenkverbindung (150) relativ zum unteren Abschnitt (101) zu schwenken.

2. Flettner-Drehvorrichtung nach Anspruch 1, wobei die Höhe h (15) größer oder gleich einer Höhe H/2 ist.

3. Flettner-Drehvorrichtung nach Anspruch 1, wobei der untere Abschnitt (101) einen inneren Turm (131, 132) umfasst, der sich von der Basis bis zu einer Höhe erstreckt, die kleiner oder gleich der Höhe h (15) ist.

4. Flettner-Rotationsvorrichtung nach Anspruch 3, wobei der Turm (131, 132) feststehend ist und die untere aerodynamische Fläche (121) in Drehung um den Turm geführt wird.

5. Flettner-Drehvorrichtung nach Anspruch 3, wobei die Drehantriebsvorrichtung so konfiguriert ist, dass sie den Turm antreibt, und
wobei die untere aerodynamische Fläche (121) drehbar mit dem Turm verbunden ist.

6. Flettner-Rotationsvorrichtung nach Anspruch 3, wobei der Turm eine Turmstruktur (800, 900) aus einem Material umfasst, das überwiegend aus Holzfasern besteht.

7. Flettner-Drehvorrichtung nach Anspruch 3, wobei die aerodynamischen Oberflächen (121, 122) eine Anordnung von Platten aus einem Material umfassen, das aus Holz, einem Verbundmaterial und einer Plane ausgewählt ist.

8. Die Flettner-Drehvorrichtung gemäß Anspruch 1, wobei die Kippvorrichtung eine Kippmittel (250) umfasst, die so konfiguriert ist, dass sie den oberen Abschnitt (102) in vertikaler Richtung bewegt, bevor sie ihn um die Achse der Schwenkverbindung schwenkt.

9. Flettner-Drehvorrichtung nach Anspruch 8, wobei die Kippmittel (250) so konfiguriert ist, dass sie die Achse der Schwenkverbindung während einer Neigung des oberen Abschnitts (102) relativ zum unteren Abschnitt (101) von der Innenseite eines Hüllendurchmessers (20) des unteren Abschnitts (101) zur Außenseite des Hüllendurchmessers des unteren Abschnitts bewegt.

10. Flettner-Drehvorrichtung nach Anspruch 8, wobei die Kippmittel (250) so konfiguriert ist, dass sie den oberen Abschnitt (102) relativ zum unteren Abschnitt (101) um einen Kippwinkel (300, 400) von mindestens 90° kippt.

11. Flettner-Drehvorrichtung nach Anspruch 10, wobei ein maximaler Kippwinkel (400) des oberen Abschnitts (102) relativ zum unteren Abschnitt (101) größer als 160° ist.

12. Flettner-Drehvorrichtung nach Anspruch 1, umfassend eine Ausgleichsvorrichtung (422) für den oberen Abschnitt (102) beim Drehen.

13. Flettner-Drehvorrichtung nach Anspruch 12, wobei die Ausgleichsvorrichtung eine Vielzahl von Gewichtsflügeln (510) und Mittel (520, 530) zum Steuern der radialen Position jedes Gewichtsflügels der Vielzahl umfasst.

14. Die Flettner-Drehvorrichtung gemäß Anspruch 12, wobei die Ausgleichsvorrichtung eine Vielzahl von Gewichtsfliegen (610) und Mittel (623, 630) zum Bewegen jeder Gewichtsfliege entlang eines Innenumfangs des oberen Abschnitts umfasst.

15. Flettner-Drehvorrichtung nach Anspruch 12, umfassend eine Vielzahl von Beschleunigungsmessern (751, 752, 753, 754), die über eine Höhe der unteren aerodynamischen Oberfläche und der oberen aerodynamischen Oberfläche verteilt sind, und ein Rechenzentrum (190), das so konfiguriert ist, dass es Schwingungsinformationen von der Vielzahl von Beschleunigungsmessern erfasst, und umfassend:
Berechnungsmittel zum Bestimmen einer Konfiguration der Ausgleichsvorrichtung (422) auf der Grundlage der von den Beschleunigungsmessern empfangenen Informationen;
Steuermittel zum Modifizieren einer Konfiguration der
Ausgleichsvorrichtung.

16. Verfahren zum Neigen der Flettner-Drehvorrichtung gemäß Anspruch 15, wobei der obere Abschnitt und der untere Abschnitt ausgerichtet und verbunden sind, mit den folgenden Schritten:
Trennen der trennbaren Mittel;
Neigen des oberen Abschnitts relativ zum unteren Abschnitt;
Neigen des oberen Abschnitts in umgekehrter Richtung, um ihn wieder mit dem unteren Abschnitt auszurichten;
Verbinden der trennbaren Mittel;
Antreiben der Drehvorrichtung in Drehung gemäß einem Messzyklus und Messen einer Schwingung unter Verwendung der mehreren Beschleunigungsmesser;
Berechnen einer Konfiguration der Ausgleichsvorrichtung unter Verwendung des Rechenzentrums;
Anwenden der berechneten Konfiguration auf die Ausgleichsvorrichtung.

## Claims

1. A Flettner rotary rigging (100) extending in a vertical direction over a height H (10) measured from a base (30), around a rotation axis (110), configured to spin around this rotation axis, comprising:
a lower section (101) comprising a lower aerodynamic surface (121) connected to a spinning drive means;
an upper section (102) comprising an upper aerodynamic surface (122) connected in continuity with the lower aerodynamic surface (121) by disconnectable connecting means (125, 321, 322); and
tilting means (250) comprising a pivot connection (150) along an axis with a direction secant to the vertical direction, between the lower section (101) and the upper section (102) at a height h (15) measured from the base (30), configured such that when the disconnectable connection means (125, 321, 322) are disconnected, the upper section (102) is capable of pivoting about the pivot connection (150) relative to the lower section (101).

2. The Flettner rotary rigging according to claim 1, wherein the height h (15) is greater than or equal to a height H/2.

3. The Flettner rotary rigging according to claim 1, wherein the lower section (101) comprises an inner tower (131, 132) extending from the base to a height less than or equal to the height h (15).

4. The Flettner rotary rigging according to claim 3, wherein the tower (131, 132) is fix and the lower aerodynamic surface (121) is guided in rotation around the tower.

5. The Flettner rotary rigging according to claim 3, wherein the spinning drive means is configured to drive the tower and wherein the lower aerodynamic surface (121) is rotatably connected to the tower.

6. The Flettner rotary rigging according to claim 3, wherein the tower comprises a tower structure (800, 900) made of a material comprising mostly wood fibers.

7. The Flettner rotary rigging according to claim 3, wherein the aerodynamic surfaces (121, 122) comprise an assembly of panels made of a material chosen from wood, a composite material and a canvas.

8. The Flettner rotary rigging according to claim 1, wherein the tilting means comprise a tilting device (250) configured to moving the upper section (102) in the vertical direction before pivoting it around the axis of the pivot connection.

9. The Flettner rotary rigging according to claim 8, wherein the tilting device (250) is configured to moving the axis of the pivot connection from the inside of an envelope diameter (20) of the lower section (101) to the outside of the envelope diameter of the lower section during a tilting of the upper section (102) relative to the lower section (101).

10. The Flettner rotary rigging according to claim 8, wherein the tilting device (250) is configured to tilting the upper section (102) relative to the lower section (101) by a tilt angle (300, 400) of at least 90°.

11. The Flettner rotary rigging according to claim 10, wherein a maximum tilting angle (400) of the upper section (102), relative to the lower section (101), is greater than 160°.

12. The Flettner rotary rigging according to claim 1, comprising a balancing device (422) of the upper section (102) in spinning.

13. The Flettner rotary rigging according to claim 12, wherein the balancing device comprises a plurality of weight -flies (510) and means (520, 530) to control the radial position of each weight-fly of the plurality.

14. The Flettner rotary rigging according to claim 12, wherein the balancing device comprises a plurality of weight-flies (610) and means (623, 630) to move each weight-fly along an inner circumference of the upper section.

15. The Flettner rotary rigging according to claim 12, comprising a plurality of accelerometers (751, 752, 753, 754) distributed over a height of the lower aerodynamic surface and the upper aerodynamic surface and a calculation center (190) configured to acquire vibration information from the plurality of accelerometers, and comprising:
calculation means to determine a configuration of the balancing device (422) based on the information received from the accelerometers;
control means to modify a configuration of the balancing device.

16. A method for tilting the Flettner rotary rigging according to claim 15, the upper section and the lower section being aligned and connected, comprising steps of:
disconnecting the disconnectable means;
tilting the upper section relative to the lower section;
tilting the upper section in reverse direction to bring it back into alignment with the lower section;
connecting the disconnectable means;
driving the rotary rigging in spinning according to a measurement cycle and measuring a vibration using the plurality of accelerometers;
computing, using the calculation center, a configuration of the balancing device;
applying the computed configuration to the balancing device.
